# EUROPEAN PATENT APPLICATION

(11) **EP 4 787 790 A2**
(43) Date of publication of application: **05.08.2026**
(21) Application number: 26178409.4
(22) Date of filing: 29.12.2022
(51) Int. Cl.: H04L 27/00

(54) **UE CAPABILITY FILTER RELATED METHODS AND APPARATUS**

(62) Divisional of application: 22969685.1
(71) Applicant: ZTE Corporation, Shenzhen, Guangdong 518057 (CN)
(72) Inventor: ZHANG, Li, Shenzhen, 518057 (CN); HUANG, He, Shenzhen, 518057 (CN); LIU, Jing, Shenzhen, 518057 (CN)
(74) Representative: Vossius & Partner Patentanwälte Rechtsanwälte mbB

(57) **Abstract**

A method for wireless communication includes receiving, by a communication device, a first signal containing an indication of a first group of frequency bands available for communication from a network device; and transmitting, by the communication device, a list of a second group of frequency bands supported by the communication device, wherein the list of the second group of frequency bands is determined independent of the indication of first group of frequency bands.

## Description

### TECHNICAL FIELD

This patent document is related to wireless communication.

### BACKGROUND

Mobile telecommunication technologies are moving the world toward an increasingly connected and networked society. In comparison with the existing wireless networks, next generation systems and communication techniques will need to support a much wider range of use-case characteristics and provide a more complex and sophisticated range of access requirements and flexibilities.

### SUMMARY

This patent document discloses techniques, among other things, related to UE capability filter processing design.

In one example aspect, a wireless communication method is disclosed. The method includes receiving, by a communication device, a first signal containing an indication of a first group of frequency bands available for communication from a network device; and transmitting, by the communication device, a list of a second group of frequency bands supported by the communication device, wherein the list of the second group of frequency bands is determined independent of the indication of first group of frequency bands.

In yet another example aspect, a wireless communication device comprising a process that is configured or operable to perform the above-described methods is disclosed.

In yet another example aspect, a computer readable storage medium is disclosed. The computer-readable storage medium stores code that, upon execution by a processor, causes the processor to implement an above-described method.

### BRIEF DESCRIPTION OF THE DRAWING

FIG. 1 shows a diagram of communicating *UECapabilityEnquiry* and *UECapabilityInformation* in a wireless communication system.
FIG. 2 is a block diagram of an example of a hardware platform that may be a part of a network device or a communication device.
FIG. 3 shows an example of network communication including a base station (BS) and user equipment (UE) based on some implementations of the disclosed technology.
FIGS. 4-9 are flowcharts representation of methods for wireless communication in accordance with one or more embodiments of the present technology.

### DETAILED DESCRIPTION

Section headings are used in the present document to facilitate understanding and do not limit scope of the disclosed technology to particular sections. Furthermore, certain terminology referring to 5G and Third Generation Partnership Project (3GPP) protocols is used as an illustrative example and the disclosed techniques are applicable to other wireless protocols also.

In a wireless network, at the time of registration, for instance, and before the UE can perform data transfer or make/receive voice calls, the network needs to understand UE's capabilities to configure the UE accordingly.

With the introduction of 5G NR and with NSA, the LTE UE capability message size would grow further as the UEs have to indicate Evolved -Universal Terrestrial Radio Access-New Radio dual connectivity (EN-DC) capabilities too.

Several optimization methods have been introduced in 3GPP LTE standards to reduce the size of the UE capability message. For example, Within the UE capability enquiry message, the network may include the IE *requestedFrequencyBands* to request the supported CA band combinations and non-CA bands specifically for a set of bands.

In the current 3GPP standard, the parameter *frequencyBandListFilter* in *UECapabilityEnquiry* can be used to request filtered UE capabilities.

Upon the reception of the *UECapabilityEnquiry*, a UE shall set the contents of *UECapabilityInformation* message. For example, the UE shall include the received *frequencyBandListFilter* in the field *appliedFreqBandListFilter* of the requested UE capability, except if the requested *rat-Type* is *nr* and the network included the *eutra-nr-only* field; *appliedFreqBandListFilter* can mirror the *FreqBandList* that the NW provided in the capability enquiry.

The definition of *appliedFreqBandListFilter* is shown in Table 1.

**Table 1.**

| **Definitions for parameters** | **Per** |
|---|---|
| ***appliedFreqBandListFilter*** | UE |
| Mirrors the *FreqBandList* that the NW provided in the capability enquiry, if any. The UE filtered the band combinations in the *supportedBandCombinationList* in accordance with this *appliedFreqBandListFilter.* | |

A network has to configure and send the *frequencyBandListFilter* to obtain information on UE-supported band combinations, feature sets, or feature set combinations. This feature is mainly used to address the growing UE capability size for Carrier Aggregation (CA) feature, and it can consume the UE memory.

However, for a reduced capability (RedCap) UE, neither CA nor dual connection (DC) is supported. In other words, there is only a single component carrier (CC). Therefore, removing this parameter or making it optional in a communication scenario involving RedCap UEs can be beneficial. No existing methods or schemes have addressed this problem.

This patent application proposes methods and apparatus involving making the *frequencyBandListFilter* in *UECapabilityEnquiry* optional for communication between a BS and a RedCap UE. The proposed methods and schemes in the current application are beneficial to reduce the overhead in communication systems by reducing processing costs on both the transmitting and receiving sides.

The details of the proposed methods will be discussed in the following embodiments.

In this patent application, four schemes have been proposed and discussed below.

**Scheme 1:** a UE may ignore *frequency BandListFilter* in *UECapabilityEnquiry.* And the UE reports the supported bands and includes the frequency band list in the field *appliedFreqBandListFilter* based on its determination.

**Scheme 2:** a new UE capability parameter is introduced to indicate whether the UE supports ignoring *frequencyBandListFilter.* If the UE supports such an ignoring operation, the UE may ignore the configured *frequencyBandListFilter* sent by the network side. And when the network side, e.g., a BS, receives a band list inconsistent with the configured band list, the network side may still consider it correct when identifying the UE capability parameter in the information sent from the UE.

**Scheme 3:** a new UE capability parameter is introduced to indicate whether the UE supports the filtering procedure. Only when reporting such filtering capability, a UE may perform the filtering procedure and report the band list based on the indication from the network.

**Scheme 4:** relax the restriction condition in the existing 3GPP standard to make the parameter *frequencyBandListFilter* configuration optional for certain types of UE.

### Embodiment 1

This section discloses, among other things, examples of Scheme 1.

Under the current specification, the *frequencyBandListFilter* must be indicated in *UECapabilityEnquity*, which means that the UE need to perform UE capability filtering based on the network's indication.

However, some UEs may not need to perform capability filtering operations. For example, certain UEs, e.g., RedCap UEs, do not support CA and DC operations. Therefore, capability filtering operations for such UES could be unnecessary or resource-consuming.

The operation of the UE capability filtering process can be simplified to lower the UE implementation complexity.

Under this scheme, a UE may ignore *freguencyBandListFilter* in *UECapabilityEnquiry.* And the UE reports the supported bands and includes the frequency band list in the field *appliedFreqBandListFilter* based on its determination

For example, a UE can ignore the information content of*frequencyBandListFilter* in *UECapabilityEnquiry* indicated from the network side.

Next, the UE can report the supported band list from the list of candidate band combinations.

For reporting *FreqBandList* in the field *appliedFreqBandListFilter* of the requested UE capability, three possible options can be adopted:
- **Option 1**: a list including all bands supported by UE.
- **Option 2:** a list including selected bands based on the UE capability.
- **Option 3:** nothing is reported.

Under the first option, a UE may report a list containing all the bands supported.

Under the second option, a UE may report a list containing a group of selected bands. The bands can be selected based on the UE capability.

Under the third option, a UE may choose not to report any bands.

Below is the proposed amendment for spec impact/change based on the current standard.

The UE shall:
1> ignore *frequencyBandListFilter* for eRedCap UE.
1> compile a list of "candidate band combinations" according to the filter criteria in *capabilityRequestFilterCommon* (if included), based on the supported band list, where for each band in the band combination, the parameters of the band do not exceed *maxBandwidthRequestedDL*, *maxBandwidthRequestedUL*, *maxCarriersRequestedDL*, *maxCarriersRequestedUL*, *ca-BandwidthClassDL-EUTRA* or *ca-BandwidthClassUL-EUTRA*, whichever are received.
1> include the selected frequency band list based on the UE capability in the field *appliedFreqBandListFilter* of the requested UE capability, except if the requested *rat-Type* is *nr* and the network included the *eutra-nr-only* field.

Here, the last bullet step is optional based on the option selected. For example, if option one or three is selected, this bullet step is unnecessary; if option two is selected, this bullet is needed.

### Embodiment 2

This section discloses, among other things, examples of Scheme 2.

Under the current specification, the *frequencyBandListFilter* must be indicated in *UECapabilityEnquiry*, which means that the UE need to perform UE capability filtering based on the network's indication.

However, some UEs may not need to perform capability filtering operations. For example, certain UEs, e.g., RedCap UEs, do not support CA and DC operations. Therefore, capability filtering operations for such UEs could be unnecessary or resource-consuming.

The operation of UE capability filtering can be simplified to reduce UE implementation complexity.

Under this scheme, a new UE capability parameter is introduced to indicate whether the UE supports ignoring of *frequencyBandListFilter.* If the UE supports such an ignoring operation, the UE may ignore the configured *frequencyBandListFilter* sending by the network side. And when the network side, e.g., a BS, receives a band list inconsistent with the configured band list, the network side may still consider it correct when identifying the UE capability parameter in the information sent from the UE.

For example, a UE shall ignore *frequencyBandListFilter* in *UECapabilityEnquiry* that is sent from the network.

Then the UE reports the supported band list by itself. In addition, in order to facilitate the network to judge that this reporting operation is because the UE supports the "ignore" function, a new UE capability may be introduced to indicate this. This new UE capability may be defined as below:

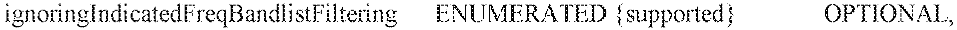

Once the UE reports this capability, the UE can ignore *frequencyBandListFilter* indicated by the network.

Then the UE reports a band list in the field *appliedFreqBandListFilter.*

For reporting *FreqBandList* in the field *appliedFreqBandListFilter* of the requested UE capability, three possible options can be adopted:
- **Option 1:** a list containing all bands supported by UE.
- **Option 2:** a list containing selected bands generated based on the UE capability.
- **Option 3:** nothing is reported.

Under the first option, a UE may report a list containing all supported bands.

Under the second option, a UE may report a list containing a group of selected bands. The bands can be selected based on the UE capability.

Under the third option, a UE may choose not to report any bands.

From a network-side perspective, a BS may receive a signal containing the above capability parameter and the reported bands. By checking the capability information, the BS will know whether the indication information in *appliedFreqBandListFilter* has been ignored by a UE.

For example, when identifying the capability parameter, BS will know the indication information has been ignored. On the other hand, BS will know the indication information has not been ignored when identifying no capability parameter in the received signal.

Determining whether the indication information in *appliedFreqBandListFilter* has been ignored further helps BS to determine the cause of inconsistent received band information.

For example, a BS may determine that the band lists reported by a UE is inconsistent with the band information in the indication sent to the UE. In this case, if the BS further know the indication has been ignored by the UE, i.e., identifying the capability parameter, the BS can ignore the inconsistency and consider the band information reported by the UE correct.

Below is the proposed method's impact to the current specification of the standard.

Firstly, a new UE capability is defined as below in Table 2.

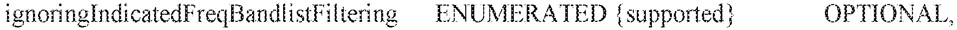

**Table 2**

| **Definitions for parameters** | **Per** | **M** | **FDD-TDD DIFF** | **FR1-FR2 DIFF** |
|---|---|---|---|---|
| ***ignoringIndicatedFreqBandlistFiltering*** | UE | Yes/No | No | No |
| Indicates whether the UE supports the ignoring for *frequencyBandListFilter* indicated by the network. | | | | |

Secondly, the UE procedure upon the reception of *UECapabilityEnquiry.*

If the UE capability is defined as mandatory, the corresponding spec can be amended as below, with the proposed amendment marked in bold. Here, FDD stands for frequency division duplexing and TDD stands for time division duplexing.
*1>* **ignore *frequencyBandListFilter* for eRedCap UE.**
1> compile a list of "candidate band combinations" according to the filter criteria in *capabilityReguestFilterCommon* (if included), **based on the supported band** list, where for each band in the band combination, the parameters of the band do not exceed *maxBandwidthRequestedDL*, *maxBandwidthRequestedUL*, *maxCarriersRequestedDL*, *maxCarriersRequestedUL*, *ca-BandwidthClassDL-EUTRA* or *ca-BandwidthClassUL-EUTRA*, whichever are received.

For the below sentence, the possible modifications are listed
1> include **the supported frequency band list** in the field *appliedFreqBandListFilter* of the requested UE capability, except if the requested *rat-Type* is *nr* and the network included the *eutra-nr-only* field;
   **or**
1> include **the selected frequency band list** in the field *appliedFreqBandListFilter* of the requested UE capability, except if the requested *rat-Type* is *nr* and the network included the *eutra-nr-only* field.

If the UE capability is defined as optional, the corresponding spec can be as below:
1> if the UE supports the ignoring filtering procedure of *UECapabilityInformation*:
**2> ignore *frequencyBandListFilter* for eRedCap UE**.
2>compile a list of "candidate band combinations" according to the filter criteria in *capabilityRequestFilterCommon* (if included), **based on the supported band list,** where for each band in the band combination, the parameters of the band do not exceed *maxBandwidthRequestedDL*, *maxBandwidthRequestedUL*, *maxCarriersRequestedDL*, *maxCarriersRequestedUL*, *ca-BandwidthClassDL-EUTRA* or *ca-BandwidthClassUL-EUTRA*, whichever are received;
2> include **the supported frequency band list** in the field *appliedFreqBandListFilter* of the requested UE capability, except if the requested *rat-Type* is *nr* and the network included the *entra-nr-only* field;
   **or**
2>include **the selected frequency band list** in the field *appliedFreqBandListFilter* of the requested UE capability, except if the requested *rat-Type* is *nr* and the network included the *entra-nr-only* field;
   1> else:
2> compile a list of "candidate band combinations" according to the filter criteria in *capabilityRequestFilterCommon* (if included), only consisting of bands included in *frequencyBandListFilter*, and prioritized in the order of *fequencyBandListFilter* (i.e. first include band combinations containing the first-listed band, then include remaining band combinations containing the second-listed band, and so on), where for each band in the band combination, the parameters of the band do not exceed *maxBandwidthRequestedDL*, *maxBandwidthRequestedUL*, *maxCarriersRequestedDL*, *maxCarriersRequestedUL*, *ca-BandwidthClassDL-EUTRA* or *ca-BandwidthClassUL-EUTRA*, whichever are received;

### Embodiment 3

This section discloses, among other things, examples of Scheme 3.

Under the current specification, the *frequencyBandListFilter* must be indicated in *UECapabilityEnquiry*, which means that the UE need to perform UE capability filtering based on the network's indication.

However, some UEs may not need to perform capability filtering operations. For example, certain UEs, e.g., RedCap UEs, do not support CA and DC operations. Therefore, capability filtering operations for such UEs could be unnecessary or resource-consuming.

Then in order to reduce UE implementation complexity, UE capability filtering may be removed or made an optional capability for a RedCap UE.

Under this scheme, a new UE capability parameter is introduced to indicate whether the UE supports the fi ltering procedure. Only when reporting such filtering capability, a UE may perform the filtering procedure and report the band list based on the indication from the network.

For example, a new UE capability parameter can be used to indicate whether a UE supports the filtering function.

If the UE supports such a filtering function, it will perform the filter procedure and include the band list based on the indication from the network,

Otherwise, the UE will ignore reporting the band list.

The new UE capability may be defined below in Table 3:

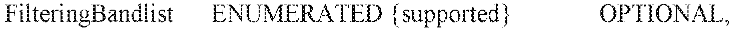

**Table 3.**

| **Definitions for parameters** | **Per** | **M** | **FDD-TDD DIFF** | **FR1-FR2 DIFF** |
|---|---|---|---|---|
| ***filteringBandlist*** | UE | No | No | No |
| Indicates whether the UE supports the filtering procedure. | | | | |

If the UE reports this capability, it will perform the filtering procedure and report the band list based on indication from the network, otherwise, the UE will ignore it.

The corresponding spec can be as below, with proposed amendment marked bold
1> if the UE supports the filtering procedure of *UECapabilityInformation*:
2> compile a list of "candidate band combinations" according to the filter criteria in *capabilityRequestFilterCommon* (if included), only consisting of bands included in *frequencyBandListFilter*, and prioritized in the order of *frequencyBandListFilter* (i.e. first include band combinations containing the first-listed band, then include remaining band combinations containing the second-listed band, and so on), where for each band in the band combination, the parameters of the band do not exceed *maxBandwidthRequestedDL*, *maxBandwidthRequestedUL*, *maxCarriersRequestedDL*, *maxCarriersRequestedUL*, *ca-BandwidthClassDL-EUTRA* or *ca-BandwidthClassUL-EUTRA*, whichever are received;
2> include the received *frequencyBandListFilter* in the field *appliedFreqBandListFilter* of the requested UE capability, except if the requested *rat-Type* is *nr* and the network included the *entra-nr-only* field;
   1> else:
2> compile a list of "candidate band combinations" according to the filter criteria in *capabilityRequestFilterCommon* (if included), **based on the supported band list,** and prioritized in the order of *frequencyBandListFilter* (i.e. first include band combinations containing the first-listed band, then include remaining band combinations containing the second-listed band, and so on), where for each band in the band combination, the parameters of the band do not exceed *maxBandwidthRequestedDL*, *maxBandwidthRequestedUL*, *maxCarriersRequestedDL*, *maxCarriersRequestedUL*, *ca-BandwidthClassDL-EUTRA* or *ca-BandwidthClassUL-EUTRA*, whichever are received,

### Embodiment 4

This section discloses, among other things, examples of Scheme 4.

Under the current specification, the *frequencyBandListFilter* must be indicated in *UECapabilityEnquiry*, which means that the UE need to perform UE capability filtering based on the network's indication.

However, some UEs may not need to perform capability filtering operations. For example, certain UEs, e.g., RedCap UEs, do not support CA and DC operations. Therefore, capability filtering operation for such UEs could be unnecessary or resource consuming.

This embodiment proposes an option to add an exception to the current specification of the standard. In particular, the parameter *frequencyBandListFilter* in *UECapabilityEnquiry*, can be explicitly defined as an optional parameter. For example, the parameter can be redefined as:

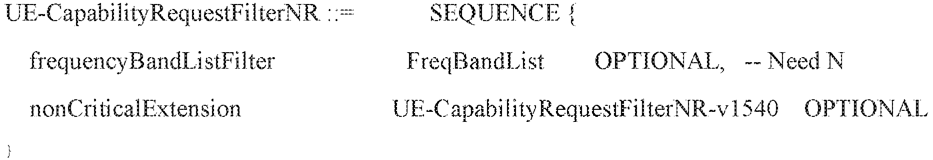

For now, the only reason this parameter must be configured is due to a restriction in the specification, shown as below:
NOTE 1: Capability enquiry without *frequencyBandListFilter* is not supported.

In the proposed amendment, to make this function as optional, the restriction may be relaxed based on a type of a wireless device.

In one example, the restriction can be amended as:

NOTE 1: Capability enquiry without *frequencyBandListFilter* is not supported **except for eRedCap UE.**

In addition, for the procedure, the corresponding modification is as below, with proposed amendment marked bold.

The UE shall:
1> compile a list of "candidate band combinations" according to the filter criteria in *capabilityRequestFilterCommon* (if included), only consisting of bands included in *frequencyBandListFilter*, **if configured,** and prioritized in the order of *frequencyBandListFilter* (i.e. first include band combinations containing the first-listed band, then include remaining band combinations containing the second-listed band, and so on), where for each band in the band combination, the parameters of the band do not exceed *maxBandwidthRequestedDL*, *maxBandwidthRequestedUL*, *maxCarriersRequestedDL*, *maxCarriersRequestedUL*, *ca-BandwidthClassDL-EUTRA* or *ca-BandwidthClassUL-EUTRA*, whichever are received;
1>include the received *frequencyBandListFilter*, **if configured,** in the field *appliedFreqBandListFilter* of the requested UE capability, except if the requested *rat-Type* is *nr* and the network included the *entra-nr-only* field.

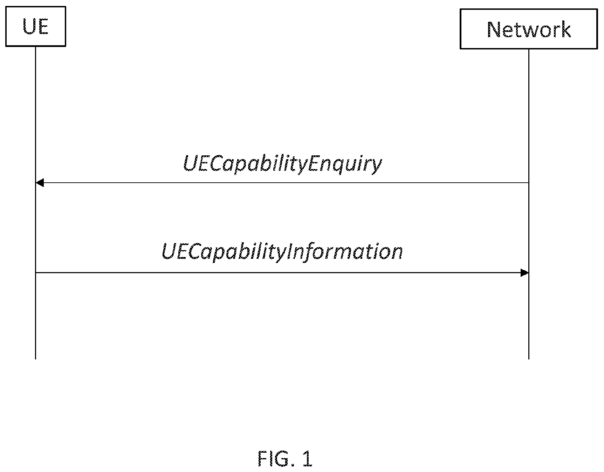

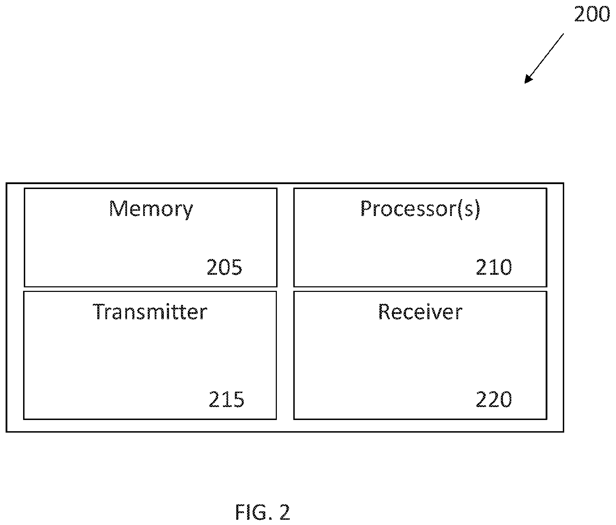

FIG. 2 shows an exemplary block diagram of a hardware platform 200 that may be a part of a network device (e.g., base station) or a communication device (e.g., a user equipment (UE)). The hardware platform 200 includes at least one processor 210 and a memory 205 having instructions stored thereupon. The instructions upon execution by the processor 210 configure the hardware platform 200 to perform the operations described in FIG. 1 and in the various embodiments described in this patent application document. The transmitter 215 transmits or sends information or data to another device. For example, a network device transmitter can send a message to user equipment. The receiver 220 receives information or data transmitted or sent by another device. For example, user equipment can receive a message from a network device.

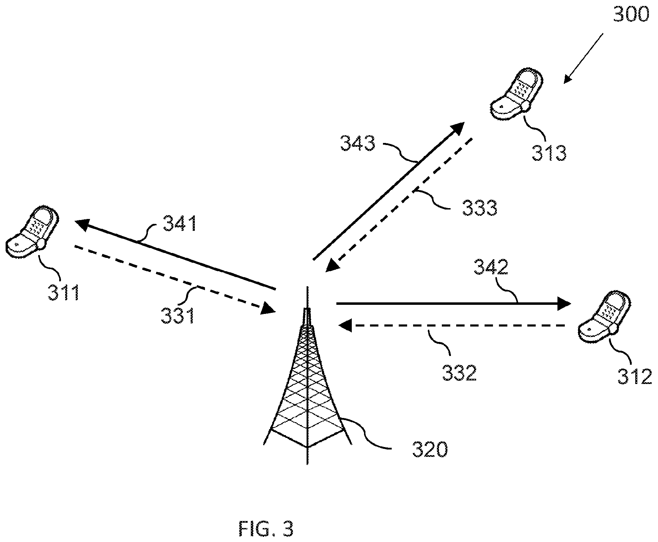

The implementations as discussed above will apply to a network communication. FIG. 3 shows an example of a communication system (e.g., a 6G or NR cellular network) that includes a base station 320 and one or more user equipment (UE) 311, 312 and 313. In some embodiments, the UEs access the BS (e.g., the network) using a communication link to the network (sometimes called uplink direction, as depicted by dashed arrows 331, 332, 333), which then enables subsequent communication (e.g., shown in the direction from the network to the UEs, sometimes called downlink direction, shown by arrows 341, 342, 343) from the BS to the UEs. In some embodiments, the BS send information to the UEs (sometimes called downlink direction, as depicted by arrows 341, 342, 343), which then enables subsequent communication (e.g., shown in the direction from the UEs to the BS, sometimes called uplink direction, shown by dashed arrows 331, 332, 333) from the UEs to the BS. The UE may be, for example, a smartphone, a tablet, a mobile computer, a machine to machine (M2M) device, an Internet of Things (IoT) device, and so on.

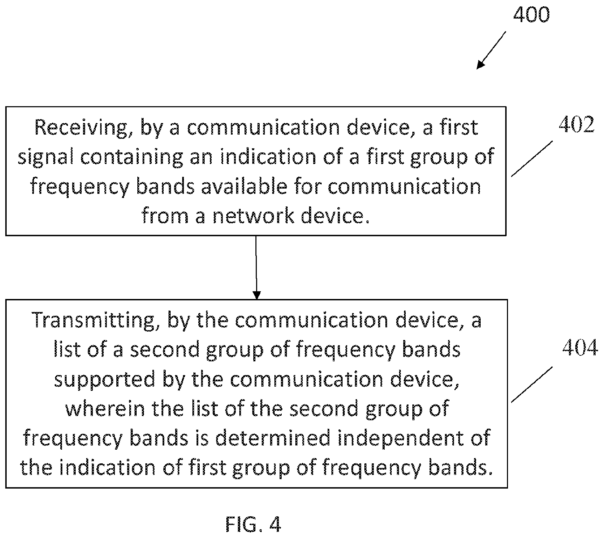

FIG. 4 shows an example flowchart representation of a method for wireless communication in accordance with one or more embodiments of the present technology. Operation 402 includes receiving, by a communication device, a first signal containing an indication of a first group of frequency bands available for communication from a network device. Operation 404 includes transmitting, by the communication device, a list of a second group of frequency bands supported by the communication device, wherein the list of the second group of frequency bands is determined independent of the indication of first group of frequency bands.

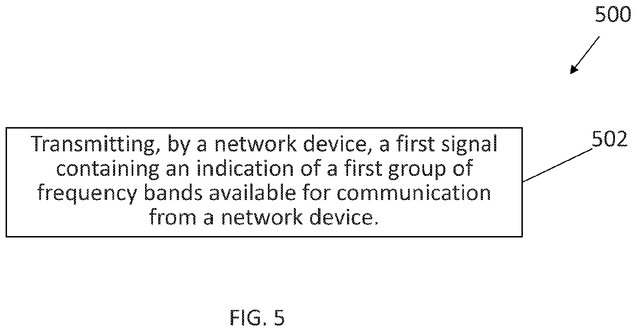

FIG. 5 show an example flowchart representation of a method for wireless communication in accordance with one or more embodiments of the present technology. Operation 502 includes transmitting, by a network device, a first signal containing an indication of a first group of frequency bands available for communication from a network device.

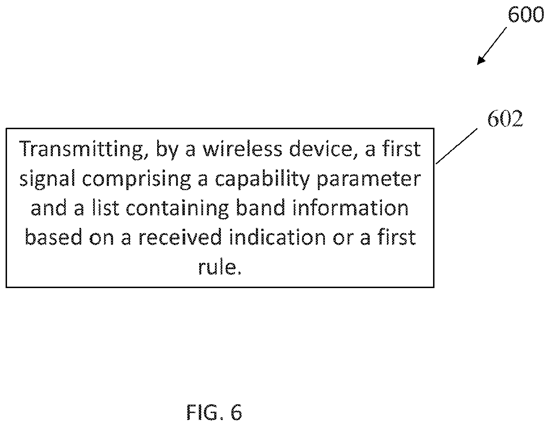

FIG. 6 shows an example flowchart representation of a method for wireless communication in accordance with one or more embodiments of the present technology. Operation 602 includes transmitting, by a wireless device, a first signal comprising a capability parameter and a list containing band information based on a received indication or a first rule.

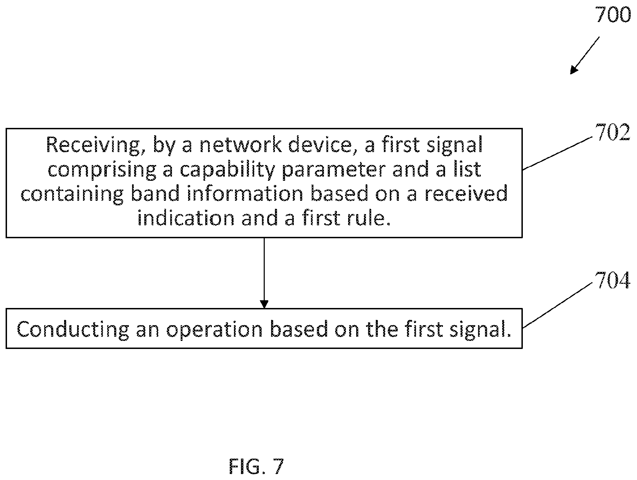

FIG. 7 show an example flowchart representation of a method for wireless communication in accordance with one or more embodiments of the present technology. Operation 702 includes receiving, by a network device, a first signal comprising a capability parameter and a list containing band information based on a received indication and a first rule. Operation 704 includes conducting an operation based on the first signal.

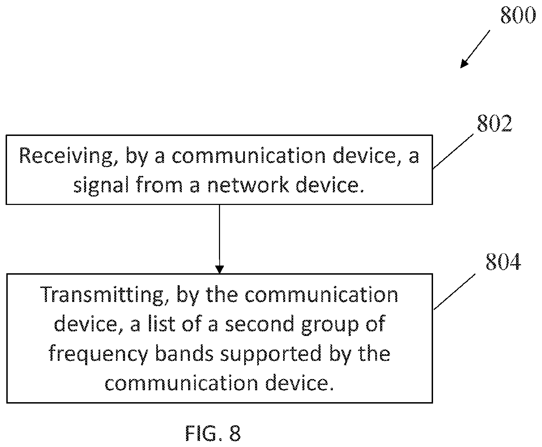

FIG. 8 shows an example flowchart representation of a method for wireless communication in accordance with one or more embodiments of the present technology. Operation 802 includes receiving, by a communication device, a signal from a network device. Operation 804 includes transmitting, by the communication device, a list of a second group of frequency bands supported by the communication device

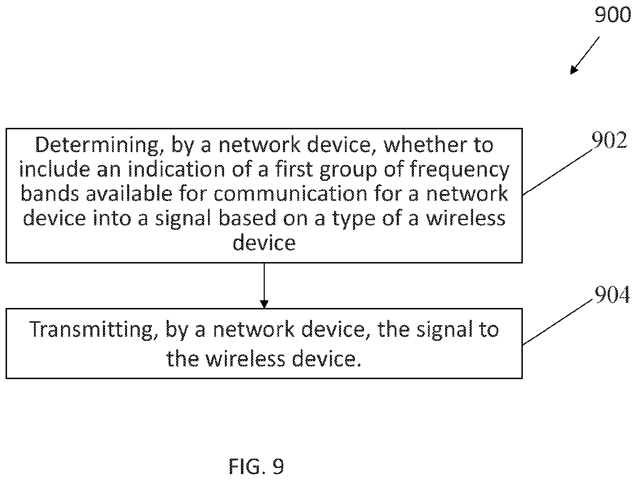

FIG. 9 show an example flowchart representation of a method for wireless communication in accordance with one or more embodiments of the present technology. Operation 902 includes determining, by a network device, whether to include an indication of a first group of frequency bands available for communication for a network device into a signal based on a type of a wireless device. Operation 904 includes transmitting, by a network device, the signal to the wireless device.

Various preferred embodiments and additional features of the above-described method of FIGS.4-9 are as follows. Further examples are described with reference to embodiments 1 to 4.

In one example aspect, a wireless communication method is disclosed. The method includes receiving, by a communication device, a first signal containing an indication of a first group of frequency bands available for communication from a network device; and transmitting, by the communication device, a list of a second group of frequency bands supported by the communication device, wherein the list of the second group of frequency bands is determined independent of the indication of first group of frequency bands.

In another example aspect, another wireless communication method is disclosed. The method includes transmitting, by a network device, a first signal containing an indication of a first group of frequency bands available for communication from a network device.

In some embodiments, the list of the second group of frequency bands comprises all bands supported by the first wireless device.

In some embodiments, the list of the second group of frequency bands is empty.

In some embodiments, the list of the second group of frequency bands comprises a subset of all bands supported by the wireless device, wherein the subset of all bands is selected based on a capability of the wireless device.

In some embodiments, the subset of all bands supported by the wireless device is generated based on a capability of the wireless device.

In some embodiments, the first wireless device is a reduced capability (RedCap) user equipment (UE).

In some embodiments, the list of the second group of frequency bands is generated based on an indication form the network device.

In one example aspect, a wireless communication method is disclosed. The method includes transmitting, by a wireless device, a first signal comprising a capability parameter and a list containing band information based on a received indication or a first rule.

In another example aspect, another wireless communication method is disclosed. The method includes receiving, by a network device, a first signal comprising a capability parameter and a list containing band information based on a received indication and a first rule; and conducting an operation based on the first signal.

In some embodiments, the first rule comprises ignoring the received indication and setting the capability parameter to indicate that the received indication was ignored.

In some embodiments, the list containing all bands supported by the wireless device.

In some embodiments, the list is empty.

In some embodiments, the list contains selected bands supported by the wireless device.

In some embodiments, the capability parameter indicates whether the wireless device supports a filtering function.

In some embodiments, the above method further comprises performing a filter procedure and include a list containing selected band based on the received indication when the wireless device supports the filtering function.

In some embodiments, the above method further comprises refraining from including information of supported band in the first signal when the wireless device does not support the filtering function.

In some embodiments, the wireless device is a reduced capability (RedCap) user equipment (UE) or other devices.

In one example aspect, a wireless communication method is disclosed. The method includes receiving, by a communication device, a signal from a network device; and transmitting, by the communication device, a list of a second group of frequency bands supported by the communication device.

In another example aspect, another wireless communication method is disclosed. The method includes determining, by a network device, whether to include an indication of a first group of frequency bands available for communication for a network device into a signal based on a type of a wireless device; and transmitting, by a network device, the signal to the wireless device.

In some embodiments, the type of the wireless device is transmitted from the wireless device to the network device

In some embodiments, the type comprises a reduced capability (RedCap) user equipment (UE).

In some embodiments, the list of the second group of frequency bands is generated based on a capability of the wireless device.

It will be appreciated that the present document discloses methods and apparatus related to UE capability function design in a wireless communication system. In current standards, the network must include the *frequencyBandListFilter* to transmit to a UE. However, for a special type of UE, e.g., a RedCap UE, this feature can be redundant since such UE does not support CA or DC. Therefore, it is beneficial to remove this parameter or make it optional in a communication scenario involving a RedCap UE. No existing methods or schemes have addressed this problem.

This patent application proposes methods and apparatus involving making the *frequencyBandListFilter* in *UECapabilityEnquiry* optional for a communication between a BS and a RedCap UE. The proposed methods and schemes in the current application are beneficial to reduce the overhead in communication systems by reducing processing cost on both the transmitting and receiving sides

The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or a variation of a subcombination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

The following items refer to preferred embodiments:
1. A method for wireless communication, comprising:
   receiving, by a communication device, a first signal containing an indication of a first group of frequency bands available for communication from a network device; and
   transmitting, by the communication device, a list of a second group of frequency bands supported by the communication device, wherein the list of the second group of frequency bands is determined independent of the indication of first group of frequency bands.
2. A method for wireless communication, comprising:
   transmitting, by a network device, a first signal containing an indication of a first group of frequency bands available for communication from a network device.
3. The method of item 1, wherein the list of the second group of frequency bands comprises all bands supported by the first wireless device.
4. The method of item 3, wherein the list of the second group of frequency bands is empty.
5. The method of item 3, wherein the list of the second group of frequency bands comprises a subset of all bands supported by the wireless device, wherein the subset of all bands is selected based on a capability of the wireless device.
6. The method of item 3, wherein the subset of all bands supported by the wireless device is generated based on a capability of the wireless device.
7. The method of item 1 or 2, wherein the first wireless device is a reduced capability (RedCap) user equipment (UE).
8. A method for wireless communication, comprising:
   transmitting, by a wireless device, a first signal comprising a capability parameter and a list containing band information based on a received indication or a first rule.
9. A method for wireless communication, comprising:
   receiving, by a network device, a first signal comprising a capability parameter and a list containing band information based on a received indication and a first rule; and
   conducting an operation based on the first signal
10. The method of item 8, wherein the first rule comprises ignoring the received indication and setting the capability parameter to indicate that the received indication was ignored.
11. The method of item 10, where the list containing all bands supported by the wireless device.
12. The method of item 10, wherein the list is empty.
13. The method of item 10, wherein the list contains selected bands supported by the wireless device
14. The method of item 8, wherein the capability parameter indicates whether the wireless device supports a filtering function.
15. The method of item 14, further comprises performing a filter procedure and include a list containing selected band based on the received indication when the wireless device supports the filtering function.
16. The method of item 14, further comprises refraining from including information of supported band in the first signal when the wireless device does not support the filtering function.
17. The method of item 8 or 9, wherein the wireless device is a reduced capability (RedCap) user equipment (UE) or other devices,
18. A method for wireless communication, comprising:
   receiving, by a communication device, a signal from a network device; and
   transmitting, by the communication device, a list of a second group of frequency bands supported by the communication device.
19. A method for wireless communication, comprising:
   determining, by a network device, whether to include an indication of a first group of frequency bands available for communication for a network device into a signal based on a type of a wireless device; and
   transmitting, by a network device, the signal to the wireless device.
20. The method of item 19, wherein the type of the wireless device is transmitted from the wireless device to the network device.
21. The method of item 20, wherein the type comprises a reduced capability (RedCap) user equipment (UE).
22. The method of item 18, wherein the list of the second group of frequency bands is generated based on an indication form the network device.
23. An apparatus for communication network, comprising: a processor configured to implement a method recited in any of items 1 to 22.
24. A computer-readable storage medium having code stored thereupon, the code, upon execution by a processor, causing the processor to implement a method recited in any of items 1 to 22.

## Claims

1. A method for wireless communication, comprising:
transmitting, by a reduced capability, RedCap, user equipment, UE, a first signal comprising a capability parameter and a list containing band information based on a received indication or a first rule.

2. A method for wireless communication, comprising:
receiving, by a network device from a reduced capability, RedCap, user equipment, UE, a first signal comprising a capability parameter and a list containing band information based on a received indication and a first rule; and
conducting an operation based on the first signal.

3. The method of claim 1 or 2, wherein the first rule comprises ignoring the received indication and setting the capability parameter to indicate that the received indication was ignored.

4. The method of claim 3, where the list containing all bands supported by the UE.

5. The method of claim 3, wherein the list is empty.

6. The method of claim 3, wherein the list contains selected bands supported by the wireless device.

7. The method of claim 1 or 2, wherein the capability parameter indicates whether the wireless device supports a filtering function.

8. The method of claim 7, further comprises performing a filter procedure and include a list containing selected band based on the received indication when the wireless device supports the filtering function.

9. The method of claim 7, further comprises refraining from including information of supported band in the first signal when the wireless device does not support the filtering function.

10. A reduced capability, RedCap, user equipment, UE, comprising: a processor configured to implement a method recited in any of claims 1 and 3 to 9, insofar as dependent on claim 1.

11. A network device, comprising: a processor configured to implement a method recited in any of claims 2 and 3 to 9, insofar as dependent on claim 2.

12. A computer-readable storage medium having code stored thereupon, the code, upon execution by a processor of a reduced capability, RedCap, user equipment, UE, causing the UE to implement a method recited in any of claims 1 and 3 to 9, insofar as dependent on claim 1.

13. A computer-readable storage medium having code stored thereupon, the code, upon execution by a processor of a network device, causing the network device to implement a method recited in any of claims 2 and 3 to 9, insofar as dependent on claim 2.
